Europäisches Patentamt

(19) European Patent Office

Office européen des brevets

(11) Publication number: **0 053 012**
**B1**

(12) **EUROPEAN PATENT SPECIFICATION**

(45) Date of publication of patent specification: **03.04.85**

(21) Application number: **81305478.0**

(22) Date of filing: **19.11.81**

(51) Int. Cl.⁴: **B 64 D 11/06**

(54) Framing assembly for a multi-passenger seating unit.

(30) Priority: **20.11.80 US 208955**

(43) Date of publication of application:
**02.06.82 Bulletin 82/22**

(45) Publication of the grant of the patent:
**03.04.85 Bulletin 85/14**

(84) Designated Contracting States:
**BE DE FR GB IT**

(56) References cited:
**GB-A-2 022 403**
**GB-A-2 037 579**
**US-A-3 468 582**
**US-A-3 653 713**

(73) Proprietor: **PTC Aerospace Inc.**
**Bantam Connecticut 06750 (US)**

(72) Inventor: **Long, William Allen**
**Westleigh Drive**
**Harwinton Connecticut (US)**
Inventor: **Fischer, Ward Ellsworth**
**P.O. Box 962**
**Torrington Connecticut 06790 (US)**
Inventor: **Brunelle, Rene Joseph**
**12 Ivy Lane**
**Wolcott Connecticut (US)**

(74) Representative: **Newby, John Ross et al**
**J.Y. & G.W. Johnson Furnival House 14/18 High**
**Holborn**
**London WC1V 6DE (GB)**

## Description

The invention relates to seating and particularly to a multi-passenger seating unit for use, for example, in aircraft. As fuel and other costs of owning and operating aircraft have increased, it has been found desirable to increase the seating density. This action serves to increase revenue during those trips when the aircraft is fully loaded and thus reduces the need to increase ticket prices to achieve a desired level of earnings. For example, by moving from a configuration of 30 rows at an 889 mm (35 inch) pitch to 36 rows at a 737 mm (29 inch) pitch, 6 rows can be gained. Obviously, however, passengers like to be comfortable during a long trip. Thus, if they find that one airline's seats are so closely pitched that their knees contact the seat in front of them or that they cannot move their feet or legs without bumping into the rear seat legs, they might prefer to take their next flight on another airline that has more comfortable seating arrangements.

Stringent regulations for aircraft seats and the design of the seat retaining tracks incorporated in all aircraft make it almost mandatory that the mounting studs of the front and rear legs of a seat be spaced apart at least about 450 mm (18 inches). Such large spacings are necessary since it is essential that a fully loaded seat withstand 9 g's of force without pulling out of the seat track. For a three-person seat weighing 25 Kg (55 pounds), this means that 2550 Kg (5,625 pounds) of loading must be absorbed since the total weight of three passengers is assumed to be 230 Kg (510 pounds) and the total weight of the under-seat luggage is assumed to be 27.2 Kg (60 pounds). As the pitch or distance between a given point on a pair of seats is reduced, the restricting effect on a passenger's freedom to move his feet and legs and to stow his carry-on baggage is greatly magnified. For example, assuming a 457 mm (18 inch) front to rear leg spacing distance, an 838 mm (33 inch) seat pitch spacing will leave a 381 mm (15 inch) space between the rear leg of one seat and the front leg of the next, while a 737 mm (29 inch) pitch will reduce this space to 279 mm (11 inch). In other words, a 12% reduction in seat pitch spacing will produce a 27% reduction in leg space.

Various framing assemblies for supporting passenger seats can be found in the prior art. GB—A—2 037 579 discloses a seating system according to the precharacterising part of claim 1 consisting of pairs of seat rows with at least one seat per row, wherein in each pair of rows, at least one seat in one of the rows can be converted into an upper berth and at least one seat in the other of the rows can be converted into a lower berth. The support means for the seats in this seat system comprise various curved and angled support members. One of the support members for the seat convertible into the upper berth is somewhat L-shaped with the shorter leg of the L extending to the floor and the longer leg of the L extending up the seat back. The seat in the other row of the system, which is to be converted into a lower berth, is supported by three rotating link members having three support points and includes a slightly angled support member, the longer end of which extends downwardly to an intermediate floor support point located between front and rear support points and the shorter end of which extends upwardly to a support point located towards the rear of the seat frame. It is a disadvantage of this known framing assembly, that there is no means provided for dissipating energy in the area of the L-shaped rear leg member where seating loads or crash loads will tend to reduce or enlarge, respectively, the angle between the centre lines of the long and short leg portions.

According to the present invention there is provided a framing assembly for supporting a plurality of seats in a multi-passenger seating unit comprising, a front stretcher member, a rear stretcher member positioned parallel to and spaced from said front stretcher member, a plurality of fore and aft extending support members attached to each of said stretcher members, a plurality of seat cushion supporting panels joined to said stretcher members and located between adjacent pairs of said plurality of support members, a plurality of front leg members adapted to be attached at their lower ends to a seating track member, a plurality of rear leg members, each having integral longer and shorter legs forming a generally inverted "L" shape, each rear leg member being adapted to be attached at its lower end to a seating track member, and a member extending between the lower ends of said front and rear leg members, the legs of each said rear leg member being disposed at such an angle that a major part of the rear surfaces of both the longer and shorter legs, as measured from their juncture, lies forwardly of an imaginary line connecting the axis of the rear stretcher member and said point at which said rear leg member is adapted to be attached to a seating track member, which is characterised in that each front leg member is attached to and extends downwardly from said front stretcher member and the shorter leg of each rear leg member is attached to and extends downwardly from said rear stretcher member, and the longer leg of each rear leg member is directed upwardly and forwardly from the point where it is adapted to be attached to the seating track member, and in that the juncture of the longer and shorter legs of each rear leg member includes a connection portion at its forwardmost surface to which the upper end of a compression member is joined, said compression member being joined at its lower end to the lower end of a respective front leg member.

Desirably the shorter leg portion is positioned so that it is aligned with the compression member and is attached thereto so as to join the lower end of the front leg member to the rear stretcher member. The L-shaped member is preferably forged from an aluminium alloy and preferably has its maximum cross-section in the fore and aft direction in the region near the juncture of its leg portions, to maximize its stiffness and its ability to resist straightening out under tension loading. If the rear leg member did tend to straighten out, it would raise the centre of gravity of the seat, thus increasing the moments and forces exerted on the seat and accelerating its failure. The rear surface of the longer leg portion of the L-shaped rear leg member is desirably positioned at an angle of at least 10° and preferably about 22½° forwards of the intersection of the rear surface with an imaginary line drawn between the axis of the rear stretcher member and the point at which the L-shaped rear leg member is attached to the seat track fitting. This angle produces an increased space which is available for permitting a passenger to move his feet or cross his legs. The upwardly sloping rear surface of the rear leg member also serves as a convenient foot rest.

The invention will now be described, by way of example, reference to the accompanying drawing, in which:—

Figure 1 is a perspective view of a multi-passenger seat which is partially broken away to illustrate the improved framing system,

Figure 2 is a partially broken away enlarged sectional view taken on line 2—2 of Figure 1,

Figure 3 is a sectional view taken on line 3—3 of Figure 2,

Figure 4 is an enlarged fragmentary sectional view taken on line 4—4 of Figure 1,

Figure 5 is a front view of the front seat leg, and

Figure 6 is a front view of the rear seat leg.

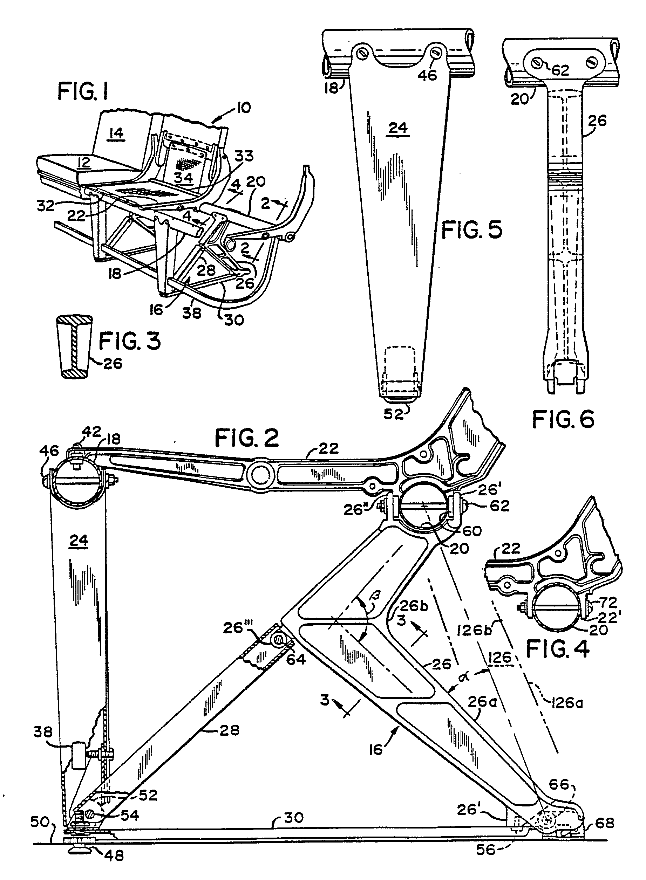

Referring to Figure 1, a three-passenger seat unit is indicated generally at 10 and can be seen to generally comprise seat cushions 12, back cushions 14, and a framing assembly indicated generally at 16. The framing assembly includes a front stretcher tube member 18, a rear stretcher tube member 20, and fore and aft arm support members 22 mounted to the stretcher tube members 18, 20. It further includes tubular front leg members 24, rear leg members 26, tubular compression members 28, and channel-shaped horizontal track cover members 30. The seat cushions 12 are supported by a fabric seat cushion supporting panel 32 which is attached at its front edge to the stretcher tube member 18 and at its rear edge to a rod 33 supported by the members 22. The back cushion 14 is supported by a back diaphragm portion 34. A baggage bar member 38 passes through apertures in the front leg members 24 for restraining the forward movement of luggage stored under the seat.

Figure 2 illustrates additional details of the framing assembly 16, including fasteners 42 that fasten the fore and aft arm support member 22 to the stretcher tube member 18; fasteners 46 that fasten the front leg members 24 to the stretcher tube member 18; a track mounting stud 48 which engages a seat track 50 and holds together a U-shaped bracket 52 and the track cover member 30; a fastener 54 which holds together the front leg member 24, the bracket 52 and the compression member 28; a fastener 56 which holds the track cover member 30 to a portion 26' of the rear leg member 26; spacers 60 which fill the space between vertical retaining portions 26" of the rear leg member 26 and are attached to the rear tube member 20 by through bolts 62; retaining fastener 66 which holds the rear leg member 26 to a rear track fitting member 68; and a fastener 64 which retains the upper end of the compression member 28 to a projecting portion 26''' of the rear leg member 26.

Figure 4 illustrates one manner in which projecting portions 22' of the fore and aft support member 22 may be attached to the rear tube member 20 by a fastener 72. Alternatively, the member 22 may be positioned directly over the leg member 26 and retained by the bolt 62. In the latter situation, the spacers 60 would be omitted.

Figures 5 and 6 are front plan views of the front leg member 24 and the rear leg member 26, respectively. The front leg member 24 is fastened to the front stretcher tube member 18 by the fasteners 46 and the rear leg member 26 is fastened to the rear stretcher tube member 20 by the bolt 62. The rear leg member 26 is preferably forged to have a generally I-shaped cross-section with a thin web and wide flanges, to minimize its weight, as seen in Figures 3 and 6. The wider flange faces rearwardly and defines the rearmost surface of the rear leg member 26.

As best seen in Figure 2, the novel construction of the framing assembly 16 permits the rear surface 26a of the leg member 26 to be positioned considerably forwards of the conventional position of a rear leg. The surface 26a is positioned at an angle α forwardly of the intersection of the surface 26a with an imaginary line connecting the axis of the rear stretcher tube member 20 and the axis of the fastener 66 by which the leg member is pinned to the track fitting member 68. The angle α should be at least 10° and preferably about 22.5° so that the clearance space rearwardly of the point marked 26b will be a maximum so as to better accommodate the legs and feet of a passenger seated in the next rearward seat. As compared to a conventional rear leg indicated in phantom as 126, the improved framing assembly permits the region 26b on the angled leg member 26 to be located at least about 11.5 cm forward of a point 126b on the imaginary rear surface 126a of a conventional rear leg. This ensures ample space for a passenger to cross his legs. Additionally, the wide flat surface 26a defines a convenient foot rest which some passengers might find to be useful.

Preferably, the members 22 and 26 are formed as aluminium alloy forgings for maximum strength and light weight. The other members 18, 20, 24, 28 and 30 are preferably formed as tubes or channels. The L-shaped rear leg member 26 has a maximum depth at the junction of its long and short leg portions since that is the area where seating loads or crash loads will tend to reduce or enlarge, respectively, the angle β shown between the centre lines of the long and short leg portions.

**Claims**

1. A framing assembly for supporting a plurality of seats in a multi-passenger seating unit comprising, a front stretcher member (18), a rear stretcher member (20) positioned parallel to and spaced from said front stretcher member (18), a plurality of fore and aft extending support members (22) attached to each of said stretcher members (18, 20), a plurality of seat cushion supporting panels (32) joined to said stretcher members (18, 20) and located between adjacent pairs of said plurality of support members (22), a plurality of front leg members (24) adapted to be attached at their lower ends to a seating track member (50), a plurality of rear leg members (26), each having integral longer and shorter legs forming a generally inverted "L" shape, each rear leg member (26) being adapted to be attached at its lower end to a seating track member (50), and a member (30) extending between the lower ends of said front and rear leg members (24, 26), the legs of each said rear leg member (26) being disposed at such an angle that a major part of the rear surfaces (26a, 26b) of both the longer and shorter legs, as measured from their juncture, lies forwardly of an imaginary line (126) connecting the axis of the rear stretcher member (20) and said point at which said rear leg member (26) is adapted to be attached to a seating track member (50), characterised in that each front leg member (24) is attached to and extends downwardly from said front stretcher member (18) and the shorter leg of each rear leg member (26) is attached to and extends downwardly from said rear stretcher member (20), and the longer leg of each rear leg member (26) is directed upwardly and forwardly from the point where it is adapted to be attached to the seating track member, and in that the juncture of the longer and shorter legs of each rear leg member (26) includes a connection portion (26''') at its forwardmost surface to which the upper end of a compression member (28) is joined, said compression member (28) being joined at its lower end to the lower end of a respective front leg member (24).

2. The framing assembly of claim 1, characterised in that the rear surface (26a) of said major portion of said longer leg is forward of a line located at least 10° forwardly from said imaginary line (126) about an axis of rotation centred on the point of intersection of said imaginary line (126) with said rear surface (26a).

3. The framing assembly of claim 1, characterised in that the rear surface (26a) of said major portion of said longer leg is forward of a line located at least 20° forwardly from said imaginary line (126) about an axis of rotation centred on the point of intersection of said imaginary line (126) with said rear surface (26a).

4. The framing assembly of claim 1, characterised in that the rear surface (26a) of said major portion of said longer leg is forward of a line located about 22½° forwardly from said imaginary line (126) about an axis of rotation centred on the point of intersection of said imaginary line (126) with said rear surface (26a).

5. The framing assembly of any preceding claim, characterised in that the compression member (28) is aligned with the shorter leg of the L-shaped rear leg member (26).

6. The framing assembly of any preceding claim, characterised in that the rear leg member (26) is forged from an aluminium alloy to have a generally I-shaped cross-section.

7. The framing assembly of claim 6, characterised in that the wider flange of the I-shaped cross-section rear leg member (26) faces rearwardly.

8. The framing assembly of any preceding claim, characterised in that the rear leg member (26) has its maximum cross-section in the fore and aft direction in the region (26b) of the juncture of its leg portions.

9. The framing assembly of any preceding claim, characterised in that the member (30) is a channel-shaped member which covers the seating track member (50) to which the lower ends of the front and rear leg members are attached.

10. A framing assembly of any preceding claim, characterised in that said front and rear stretcher members (18, 20), said front leg member (24) and said compression member (28) are all of tubular construction.

**Patentansprüche**

1. Eine Rahmenkonstruktion als Unterbau für eine Reihe von Sitzen in einer Mehrfachsitzeinheit, bestehend aus einer vorderen Spannvorrichtung (18), einer hinteren Spannvorrichtung (20), die in einem Abstand parallel zur genannten, vorderen Spannvorrichtung (18) angeordnet ist, einer Reihe von längsverlaufenden Trägerbauteilen (22), die jeweils mit den genannten Spannvorrichtungen (18, 20) verbunden sind, einer Reihe von Sitzpolsterauflageplatten (32), die mit den genannten Spannvorrichtungen (18, 20) verbunden und zwischen angrenzenden Paaren der genannten Reihe von Trägerbauteilen (22) angeordnet sind, einer Reihe von vorderen Stützelementen (24), deren untere Enden mit einem Sitzschienenbauteil (50) verbunden werden können, einer Reihe von hinteren Stützelementen (26), die in einteiliger Ausführung jeweils mit einem längeren und einem kürzeren Schenkel generell der Form eines umgekehrten "L" entsprechen, wobei das untere Ende eines jeden hinteren Stützelements (26) mit einem Sitzschienenbauteil (50) verbunden werden kann, und einem Bauteil (30), das zwischen den unteren Enden der genannten, vorderen und hinteren Stützelemente (24, 26) verläuft, wobei die Schenkel eines jeden der genannten, hinteren Stützelemente (26) in einem solchen Winkel angeordnet sind, daß die hinteren Flächen (26a, 26b) der längeren sowie der kürzeren Schenkel, von ihrer Verbindungsstelle aus gemessen, zum größeren Teil vor einer gedachten Linie (126) liegen, die die Achse der hinteren Spannvorrichtung (20) und den genannten Punkt, an dem das genannte, hintere Stützelement (26) an einem Sitzschienenbauteil (50) befestigt werden kann, miteinander verbindet, dadurch gekennzeichnet, daß jedes vordere Stützelement (24) mit der genannten, vorderen Spannvorrichtung (18) verbunden ist und von dieser Vorrichtung aus nach unten verläuft, der kürzere Schenkel eines jeden hinteren Stützelements mit der genannten, hinteren Spannvorrichtung (20) verbunden ist und von dieser Vorrichtung aus nach unten verläuft, der längere Schenkel eines jeden, hinteren Stützelements (26) von dem Punkt aus, an dem er am Sitzschienenbauteil befestigt werden kann, vorwärts gerichtet nach oben verläuft, und daß die Verbindungsstelle der längeren und kürzeren Schenkel eines jeden, hinteren Stützelements (26) einen Anschlußbereich (26''') an seiner vordersten Fläche umfaßt, mit der das obere Ende eines Druckelements (28) verbunden ist, wobei das genannte Druckelement (28) an seinem unteren Ende am unteren Ende des entsprechenden, vorderen Stützelements (24) befestigt ist.

2. Eine Rahmenskonstruktion gemäß Anspruch 1, dadurch gekennzeichnet, daß die hintere Fläche (26a) des genannten, größeren Teils des genannten, längeren Schenkels vor einer Linie liegt, die zumindest 10° vor der genannten, gedachten Linie (126) über eine Drehachse verläuft, deren Mittelpunkt im Schnittpunkt der genannten, gedachten Linie (126) mit der genannten, hinteren Fläche (26a) liegt.

3. Eine Rahmenkonstruktion gemäß Anspruch 1, dadurch gekennzeichnet, daß die hintere Fläche (26a) des genannten, größeren Teils des genannten, längeren Schenkels vor einer Linie liegt, die zumindest 20° vor der genannten, gedachten Linie (126) über eine Drehachse verläuft, deren Mittelpunkt im Schnittpunkt der genannten, gedachten Linie (126) mit der genannten, hinteren Fläche (26a) liegt.

4. Eine Rahmenkonstruktion gemäß Anspruch 1, dadurch gekennzeichnet, daß die hintere Fläche (26a) des genannten, größeren Teils des genannten, längeren Schenkels vor einer Linie liegt, die etwa $22\frac{1}{2}°$ vor der genannten, gedachten Linie (126) über eine Drehachse verläuft, deren Mittelpunkt im Schnittpunkt der genannten, gedachten Linie (126) mit der genannten, hinteren Fläche (26a) liegt.

5. Eine Rahmenkonstruktion gemäß irgendeinem der vorstehenden Ansprüche, dadurch gekennzeichnet, daß das Druckelement (28) mit dem kürzeren Schenkel des L-förmigen, hinteren Stützelements (26) eine gerade Linie bildet.

6. Eine Rahmenkonstruktion gemäß irgendeinem der vorstehenden Ansprüche, dadurch gekennzeichnet, daß das hintere Stützelement (26) aus einer Aluminiumlegierung mit einem generell I-förmigen Querschnitt geschmiedet ist.

7. Eine Rahmenkonstruktion gemäß Anspruch 6, dadurch gekennzeichnet, daß der breitere Schenkel des einen I-förmigen Querschnitt aufweisenden, hinteren Stützelements (26) nach hinten gerichtet ist.

8. Eine Rahmenkonstruktion gemäß irgendeinem der vorstehenden Ansprüche, dadurch gekennzeichnet, daß das hintere Stützelement (26) seinen größten Querschnitt in Längsrichtung im Bereich (26b) der Verbindungsstelle seiner Stützabschnitte aufweist.

9. Eine Rahmenkonstruktion gemäß irgendeinem der vorstehenden Ansprüche, dadurch gekennzeichnet, daß das Bauteil (30) ein U-förmiges Bauteil ist, das das Sitzschienenbauteil (50) umfaßt, an dem die unteren Enden der vorderen und hinteren Stützelemente befestigt sind.

10. Eine Rahmenkonstruktion gemäß irgendeinem der vorstehenden Ansprüche, dadurch gekennzeichnet, daß die genannten, vorderen und hinteren Spannvorrichtungen (18, 20), das genannte, vordere Stützelement (24) und das genannte Druckelement (28) ausnahmslos rohrförmig ausgeführt sind.

## Revendications

1. Cadre pour supporter une pluralité de sièges individuels dans un ensemble de sièges multiplace pour passagers, comprenant un tirant avant (18), un tirant arrière (20) disposé parallèlement et à une certaine distance du dit tirant avant (18), une pluralité d'éléments de support (22) s'étendant d'avant en arrière, attachés à chacun des dits tirants (18, 20), une pluralité de panneaux (32) supportant les coussins de siège, joignant les dits tirants (18, 20) et disposés entre des paires adjacentes de la dite pluralité d'éléments de support (22), une pluralité de jambages avant (24) agencés pour être fixés, par leur extrémité inférieure, à une membrure (50) de guidage de l'ensemble de sièges, une pluralité de jambages arrière (26), chacun d'eux comportant, en une seule pièce, une branche plus longue et une branche plus courte affectant la forme générale d'un "L" renversé, chaque jambage arrière (26) étant agencé pour être fixé, par son extrémité inférieure, à une membrure (50) de guidage de l'ensemble de sièges, et une membrure (30) s'étendant entre les extrémités inférieures des dits jambages avant et arrière (24, 26), les branches de chacun des dits jambages arrière (26) étant disposées sous un angle tel qu'une majeure partie des surfaces arrière (26a, 26b) tant des branches plus longues que des branches plus courtes, mesurée à partir de leur point de jonction, est située en avant d'une ligne imaginaire (126) reliant l'axe du tirant arrière (20) et le dit point auquel le dit jambage arrière (26) est agencé pour être fixé à une membrure (50) de guidage de l'ensemble de sièges, caractérisé en ce que chaque jambage avant (24) est fixé au et s'étend vers le bas à partir du dit tirant avant (18), en ce que la branche plus courte de chaque jambage arrière (26) est fixée au et s'étend vers le bas à partir du dit tirant arrière (20) et la branche plus longue de chaque jambage arrière (26) est dirigée vers le haut et vers l'avant à partir du point où elle est agencée pour être fixée à la membrure de guidage de l'ensemble de sièges, et en ce que la jonction des branches plus longue et plus courte de chaque jambage arrière (26) comprend une pièce de raccordement (26''') sur sa surface située le plus en avant, à laquelle est attachée l'extrémité supérieure d'une bielle (28), la dite bielle (28) étant attachée par son extrémité inférieure à l'extrémité inférieure du jambage avant (24) respectif.

2. Cadre suivant la revendication 1, caractérisé en ce que la surface arrière (26a) de la dite majeure partie de la dite branche plus longue est située en avant d'une ligne qui est elle-même disposée au moins 10° en avant de la dite ligne imaginaire (126) par rapport à un axe de rotation autour du point d'intersection de la dite ligne imaginaire (126) et de la dite surface arrière (26a).

3. Cadre suivant la revendication 1, caractérisé en ce que la surface arrière (26a) de la dite majeure partie de la dite branche plus longue est située en avant d'une ligne qui est elle-même disposée au moins 20° en avant de la dite ligne imaginaire (126) par rapport à un axe de rotation autour du point d'intersection de la dite ligne imaginaire (126) et de la dite surface arrière (26a).

4. Cadre suivant la revendication 1, caractérisé en ce que la surface arrière (26a) de la dite majeure partie de la dite branche plus longue est située en avant d'une ligne qui est elle-même disposée environ $22\frac{1}{2}$° en avant de la dite ligne imaginaire (126) par rapport à un axe de rotation autour du point d'intersection de la dite ligne imaginaire (126) et de la dite surface arrière (26a).

5. Cadre suivant l'une ou l'autre des revendications précédentes, caractérisé en ce que la bielle (28) est alignée avec la branche plus courte du jambage arrière (26) en forme de L.

6. Cadre suivant l'une ou l'autre des revendications précédentes, caractérisé en ce que le jambage arrière (26) est obtenu par forgeage d'un alliage d'aluminium de façon à présenter une section transversale généralement en forme de I.

7. Cadre suivant la revendication 6, caractérisé en ce que l'aile la plus large de la section en I du jambage arrière (26) est disposée vers l'arrière.

8. Cadre suivant l'une ou l'autre des revendications précédentes, caractérisé en ce que le jambage arrière (26) présente sa section transversale maximum dans la direction d'avant en arrière dans la région (26b) de la jonction de ses deux branches.

9. Cadre suivant l'une ou l'autre des revendications précédentes, caractérisé en ce que la membrure (30) est un profilé en U qui couvre la membrure (50) de guidage de l'ensemble de sièges, à laquelle les extrémités inférieures des jambages avant et arrière sont fixées.

10. Cadre suivant l'une ou l'autre des revendications précédentes, caractérisé en ce que les dits tirants avant et arrière (18, 20), le dit jambage avant (24) et la dite bielle (28) sont tous constitués par des tubes.

FIG. 1

FIG. 3

FIG. 5

FIG. 6

FIG. 2

FIG. 4